Europäisches Patentamt

(19) European Patent Office

Office européen des brevets

(11) Publication number: **0 157 953**

**A2**

(12) # EUROPEAN PATENT APPLICATION

(21) Application number: 84201752.7

(51) Int. Cl.⁴: **H 02 K 17/42**

(22) Date of filing: 03.12.84

(30) Priority: 02.12.83 ES 527767

(43) Date of publication of application:
16.10.85 Bulletin 85/42

(84) Designated Contracting States:
AT BE CH DE FR GB IT LI LU NL SE

(71) Applicant: Alamo Igéno, Roberto Manuel
Perez del Toro 21
Las Palmas de Gran Canaria(ES)

(72) Inventor: Alamo Igéno, Roberto Manuel
Perez del Toro 21
Las Palmas de Gran Canaria(ES)

(74) Representative: Janssen, Frederik H.J.F. et al,
Nederlandsch Octrooibureau Johan de Wittlaan 15 P.O.
Box 29720
NL-2502 LS 's-Gravenhage(NL)

(54) An electric energy production system.

(57) Electric energy production system comprising an asynchronous alternator having two or more windings for several rotational velocities; a mechanical motor, such as a diesel engine, coupled to said alternator; an electric regulator sensing the alternator's output frequency and controlling an acceleration system; an electric commutation device to commutate manually or automatically the motor windings, thus maintaining a constant output frequency for instance when more output power is required.

FIG.5

EP 0 157 953 A2

As expressed by the statements of this descriptive report, the invention mentioned herewith refers to a system producing electrical energy and especially to the disposition of its elements in order to obtain its totally original characteristics, which make it differ from anything in the material known or practiced up to now.

It is common knowledge that in the synchronous generators known up to the present, a change in the number of revolutions per minute is not permissible with a constant frequency being maintained. This is due to the construction and design of the inductor being exclusively for a sole speed.

The purpose of this invention is to obtain electrical energy by means of the system stated in this descriptive report, composed of a primary internal combustion or hydraulic turbine engine and an asynchronous alternator with two or more speeds or number of revolutions per minute and a centrifugal-electrical regulator, the speed of which is regulated by this grouping in terms of the frequency obtained in the alternator. The result of this is a greater saving of energy and less wear on the cited system producing electrical energy.

An example of the actual application of this system is that of an electrical power station where greater potential is required at peak hours than during the rest of the day, being able to go from less power to greater (or viceversa) in various stages.

As it is well-known, an asynchronous electrical engine known at present as a squirrel cage or short-circuit electrical motor is capable of generating a low alternating current, between 0.5 and 3 volts, if it is made to turn appropriately and due to the residual magnetism the rotor has since the last time it was polarized.

More concretely, if a reactive energy is applied to an asynchro-

0157953

nous motor in the decreasing semi-periods of the sinusoid, the winding of the stator acts at that moment as an inductor on the rotor which, due to the spiral in short circuit which forms the mentioned cage constitutive of said rotor, originates in itself an electromotive force which induced is transformed into magnetic flux. In this way as it continues to turn and during the increasing semi-cycles of the sinusoid, it acts as an inductor on the stator itself. Through adequate control of the reactive energy applied, the desired output tension is reached. This control is essential not only for increasing the output tension to the planned level but also to impede the motor from saturating itself with the existing risk of its burning out.

On applying a charge to the alternator obtained in this way, there is a notable drop in the tension for which reason the excitation must be increased.

A motor can be more or less asynchronous depending directly and in great part on the polar passage of its windings, in such a way that a short passage which does not cover the number of grooves resulting from the division of their total number by the number of poles, has a more accented sliding than the passage that does cover it.

It is also true that the intensity of excitation is greater when the passage of the result of the forementioned division is lesser. That is, if said excitation is obtained by being based on condensers, these will have less capacity when the motor has less shifting.

The engine that forms part of the invention described in this report has two windings in its stator periphery, one of which is used for the useful output in terminal and the other auxiliary one is for controling the tension or for excitation.

The main winding used for output has a short passage and a number of grooves inferior to the total corresponding to each pole, using the remaining grooves to house the auxiliary winding.

Given that a winding at 100 x 100 utility of its peripheral density in output to receivers would absorb the entire magnetic field of the rotor (inductor), it is necessary to apply a very high power factor corrector to it which makes the tension recuperation system in inductive charge very costly.

As the utilization of the magnetic field of the induced is inferior to the totality of its peripheral density, the remaining density is left free of the influence of the terminal output charge of the cosine of pi as well as the drop in tension, the free space left being for the placing of the auxiliary winding where a potential in stage advance is applied to it.

In order to achieve the desired tension there are two means which are: Excitation and self-excitation.

Excitation is achieved at the expense of an independent source consisting of a second engine called excitative, which one connected to the other manage to overcome the remaining small amount of tension and by means of a regulator in order, the desired level is reached.

Self-excitation, as the word indicates, is obtained by the application of its own electric current conveniently prolonged from the crest towards the zero value and during the decreasing half of each semi-period, provoking in this way a reactive secondary electric current. As in the previous case, a regulator installed in the circuit limits the tension to the level desired.

The above-mentioned regulator will preferably be electronic and composed of a transistorized amplifier which is governed by a zener diode and which taking for reference the tension in the motor will

7

give a signal to some transistors and, or tyristors for automatic regulation in a vacuum or in a full charge.

A third system of stabilizing tension has also been planned, consisting of saturatingthe engine on a basis of condensers and without a regulator, in a limit not dangerous for it and to be used where major importance is not given to losses due to heat and with a connection preferably singlephase or two-phase.

Since the beginning when the late Edison had his dynamo shunt with the inconvenience of the tension brusquely dropping to zero value (level) if a very high power was connected to it. The same happens to synchronous alternators which have a similar connection by means of wave rectification, because when the tension which feeds the excitation drops it produces the return of the self-fed energy.

As in the same way the asynchronous alternator mentioned in this patent has the same thing occur to it in its primitive way of discovery, two solutions have been foreseen to avoid this inconvenience and consist of:

1. The forementioned disposition of two windings in which not only the peripheral density is not totally utilized in charging, but also the auxiliary (excitation) winding is fed by an external surce, generally an excitative. An excitative which only acts to recuperate charging tension when dealing with small alternators since the majority of these are easily excited by installing in them a condenser in the output of the motor and in the auxiliary winding.

2. The addition of an absorption element in the engine output towards the terminals, generating a tension with saturation superior to the normal. Said element consists of a reactance or transformer installed in series absorbing the remaining voltage, and using this circuit only in the case of the tension dropping to a level determined as excessively low and not acting normally in the case of gradual charges. The absorption element and circuit used in the excitative are to avoid such a phenomenon happening to the auxiliary source, thereby achieving that the grouping formed by these components give the alternator the same characteristics as the conventional alternators.

Given the characteristics previously exposed, there is implied a series of advantages which the asynchronous alternator presents as opposed to conventional synchronous generators, among which the following are worthy of notice:

Considering that the shifting velocity is inverse to that of the asynchronous motors, in order to achieve the nominal frequency it is necessary to have a velocity superior to that of the synchronism and not producing heat with this phenomenon, there is an increase in the tension and that by means of this a new calculation permits reducing the number of spirals to achieve the tension desired, with which the section of the conductor of the winding is augmented and consequently increasing the power.

There is a notable reduction in the cost of the generating motor as there is no cost of labour in the electric construction of the rotor, since it is dealing with the squirrel cage, its construction is purely mechanical.

There is as well a notable reduction in the risk of disintegration of the rotor as same is of very solid construction.

With the addition of a/wave rectifier the motor is applicable to the charging of storage batteries and consequently their use in cars, aviation, soldering, etc.

The rotor can reach very high velocities, for example 20,000 R.P.M. and in consequence very high frequencies which are essential for the utilization of hertzian waves.

0157953

The generator thusly obtained notably prolongs its life of usefulness by having the rotor inalterable to mechanical vibrations,
which are the cause of approximately 90% of the inutilization of
the rotors (synchronous) in generator sets moved by diesel motors.

On the other hand it has no brushes, which eliminates any main-
tenance service in this sense and which is necessary for the alternators known on the market.

Also achieved is a notable reduction in the percentage of losses
in the form of heat by not having consumption in the form of homic
resistance in the rotor and by having the stator smaller than the
one in conventional synchronous generators, which in turn results
in lower energy consumption.

Its upkeep and vigilance is reduced to the maximum, which permits its shielding or hermeticization for determined applications.

It permits greater perfection in the regulation of tension by
phases, with unbalanced charges, to the limit of intensity equally
by phases. The number of revolutions per minute can also be
changed by means of a switch and a polarization exciter, an asynchronous alternator being able to have several velocities for the
normal running rate for a set nominal frequency. This possibility
in turn facilitates making a generator set, for example of 752,
1,550 and 3,550 R.P.M. with a potential of 50, 100 and 200 K.W.H.
being able to choose the most idoneous one for each case by simply
effecting the appropriate changes on the control panel. In this
way one obtains a considerable savings in energy which results to
be impossible with any of the synchronous generators known up to
this moment. The output tension can also be changed with a simple switch within a wide range of standardized values.

The staggering of velocities can be manual or automatic, with manual operation having a switch with as many positions as the motor speeds, and on which the desired velocity can be selected. And the variety of automatic operation has a device on which, after the said alternator being at its maximum intensity for a determined period of time, activates a commutater controlled by an electromagnet and connects the alternator to another higher velocity. Reciprocally when the intensity is very low and after an equally determined time as according to a temporizer device, the inverse operation is effected.

It would be absurd to hide the inconveniences of the system, as on passing from one velocity to another and during the period of acceleration or deceleration, there is the disadvantage of having an alteration in the frequency during which and until the stabilization of the cycle, alters the functioning of some receivers, as for example, record players with synchronous or asynchronous motors, videos, etc. However it is unimportant in lighting, radio,etc

Mentioned alteration can be rectified by using momentaneously a synchronized generator set before and after changing velocities, or by using an electric current generator with nominal tension and frequency fed by the energy produced by its own system in the last circuit or velocity in service and previously accumulated for its sufficient duration, for the feeding and maintenance of the circuit or velocity following its being put into operation and disconnecting itself automatically once the cycle has been equally stabilized.

When the production system of electric energy mentioned as the object of this report is functioning automatically, it has two options in order to correct the cited problem. The previously mentioned generator will preferably be electronic and of the set frequency oscillator type fed by a direct current source and an elec-

0157953

trolytic accumulator or condenser for low-power alternators.

The second option will be a second alternator in/connection electrical
with the first and working as a motor, with a flywheel of inertia in its drive shaft in order to accumulate mechanical energy,
·connecting itself equally before and after the velocity changing
operation, and disconnecting itself once the cited cycle has been
stabilized.

The frequency regulation will be commanded by a centrifugal-
electric regulator, which, on receiving an alteration in frequency varies the speed of its electric motor which will be synchronous or asynchronous in order to suffer this alteration.  This
activates the counterweights which in turn by means of the mechanism that seconds them transmits the movement realized to a connecting rod in command and same through another external transmission to the acceleration rack of the injection pump and distributor, this being an internal combustion motor or to the acceleration butterfly, equally an internal combustion motor, regu-
lation which corrects in turn the frequency error due to the actual shifting of the asynchronism.

An important reduction of the initial price of the installation
is obtained as well in the weight, volume and cost of an electric
power station installed with this system.

In parallel to this lot of advantages, the asynchronous generator
being advocated herewith presents some disadvantages a few of which
have been mentioned since the object is to make them known.

In asynchronous generators with various velocities, there is the
drawback that on not being able to change the angle of inclination
of the grooves on the rotor, and with said inclination being the
appropriate one for only one speed, in the others there is a slight

0157953

loss of potential as this supposes the production of harmonics which can be problematic in certain cases. Taking as a solution an intermediate inclination of said angle for the range of velocities employed, this drawback is negligible.

Evidently the problem due to this small loss of potential is sensibly less important than the advantage offered by being able to have available a production system of electrical energy with several working speeds and consequently a considerable saving of energy.

At continuation a complete description of the above-mentioned patent will be made with reference to the plans accompanying same, in which the preferred manner of realization is presented simply as an example, not at all limitative and susceptible to all those modifications in detail which do not alter fundamentally its essential characteristics.

In said drawings:

-Figure 1.- , shows a schematic representation of an asynchronous alternator, with squirrel cage (1) effected in accordance with the object of this patent in which excitation is realized with the help of an excitative, (2) same being connected in series with an absorption element (3) and a reference point (4) the terminal output (5), the unit of regulation and, or excitation (6).

-Figure 2.- , shows the same scheme with the variant that the excitative has several windings and that the absorption element is or is not incorporated, according to the needs of its utilization and being able to omit it in the majority of the cases.

-Figure 3.- , shows a similar representation in which the main motor consists of two windings: One main or for output, and another

0157953

auxiliary one with continuity or without it among all for the entrance of the current from the excitative for the latter mentioned.

-Figure 4.- , shows a schematic representation of the mentioned sourrel cage alternator, with the variant of having an excitative in working condition saturated when the regulator is installed between both motors and the excitative and connected exclusively to the excitative, thusly being able to, .according to the needs of application of the alternator in question, utilize the motor(s) mentioned in this report indistinctly.

-Figure 5.- , shows a schematic representation of cited alternator (squirrel cage), self-excited, being characterized by having several windings, one main or for output and another or others auxiliary through which the excitation current is injected, same proceeding from the excitation and regulation unit.

-Figure 6.-, shows a schematic representation of the squirrel cage asynchronous alternator saturated, when the simplicity of the circuit characterizes it and being composed of only the motor in question and the exciter unit.

-Figure 7.-, shows a schematic representation of a squirrel cage alternator saturated where the simplicity of the circuit characterizes it by having one sole windingwith the purpose of reducing fabrication costs in small motors where the cost of labour in its elaboration is a very important factor.

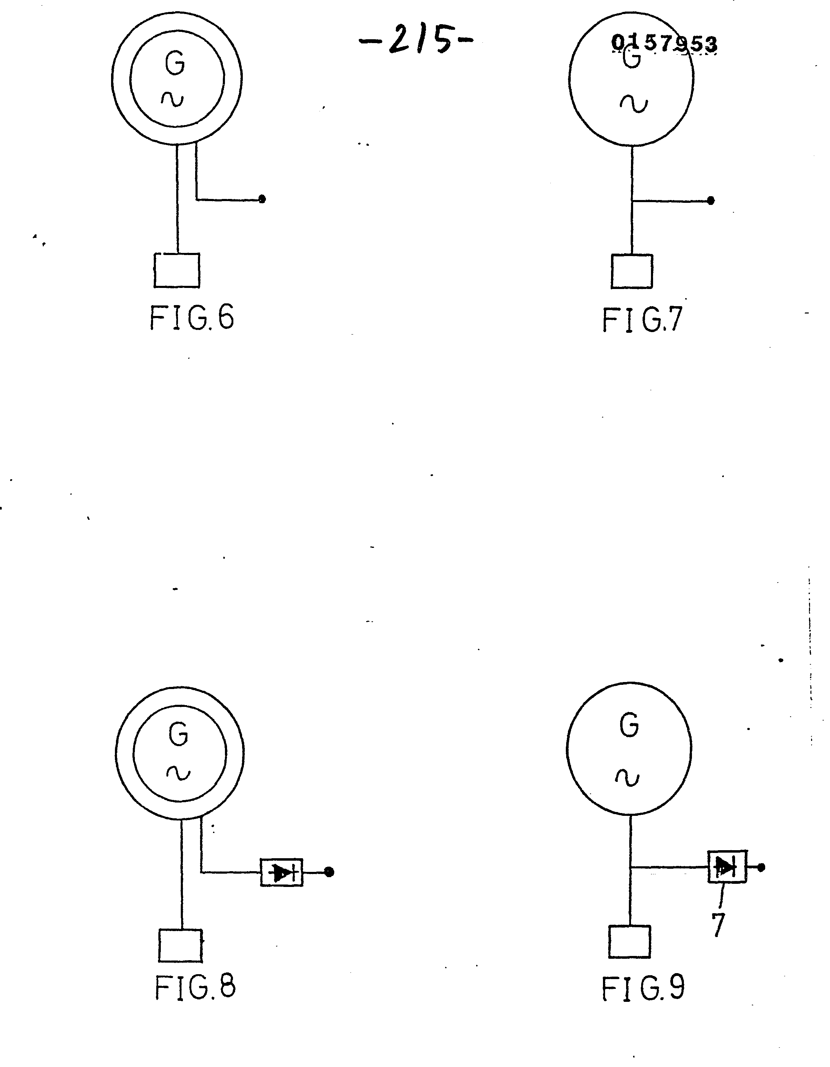

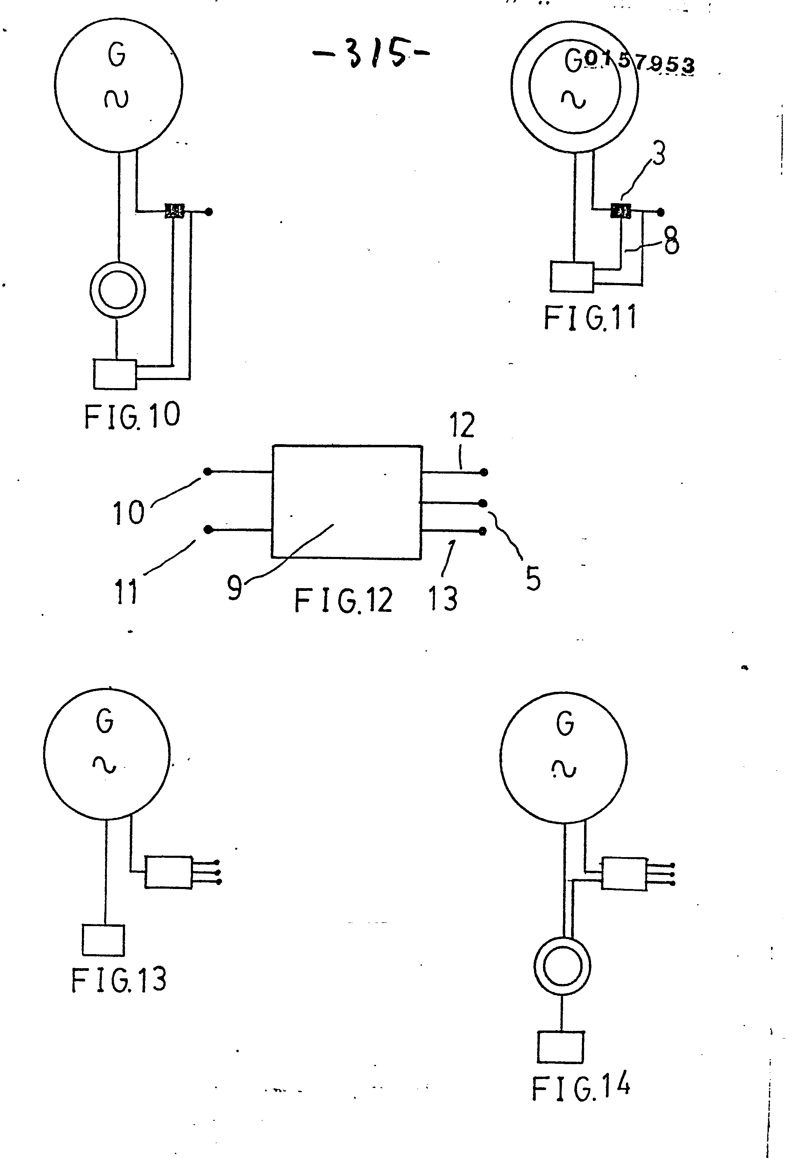

-Figures 3 and 9.-, show schematic representations of Figures (6 and 7) with the variant of having a rectifier (7) for charging storage batteries. These schemes were chosen as examples of rectification, this rectifier being applicable to any of the mentioned in the schemes of this patent.

-Figures 10 and 11.-, each show schematic representations of Figures (2 and 6) with the variant of having a tension absorption element (reactance or transformer)  , a connection (3) of this element to the regulation unit in order to leave it in ineffectiveness when it is not necessary, and the reference point is in the output of terminals. These schemes have been chosen as an example of said addition, same being applicable to any of the mentioned schemes of this patent.

-Figure 12.-, shows a schematic representation of the velocity selector, where a unit of switches (9) simultaneously commutes the unit of excitation and control and the tension output of the motor to the sector of same which has been selected, commutating in turn the different windings of the excitative in the case that same has the circuit installed. Where connections (10 and 11) go to cited motors, one connection (12) that goes to the commutation control or selector, one connection (13) that goes to the frequency regulator and a terminals output connection (5).

-Figures 13 and 14.- , each shows schematic representations of Figures (7 and 3) with the variant of having a speed selector. These schemes have been chosen as examples of said addition, being this selector applicable to any of the mentioned schemes of this patent.

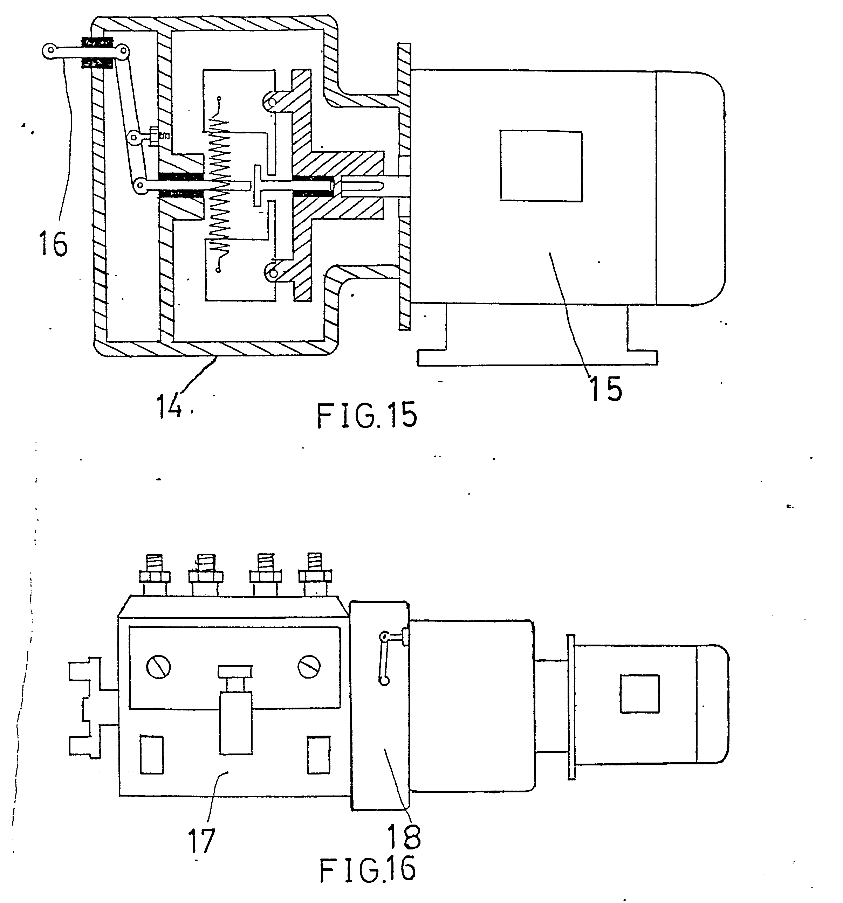

-Figure 15.- , shows a lateral view of centrifugal-electric regulator set in which the regulator in question (  ) is seen in a transversal cross section, an electric motor adjusted for working said regulator. (15) and the command connecting rod (16).

-Figure 16.- , shows a lateral view of the grouping formed by the set in Figure (15) and an injection pump and the distribution of an internal combustion motor (4 cylinders) (17) as an example of application of the set in Figure (15), same being applicable to any motor, without keeping in mind the number of cylinders.

Here the command connecting rod appears joined to the regulator of the injection pump. (18).

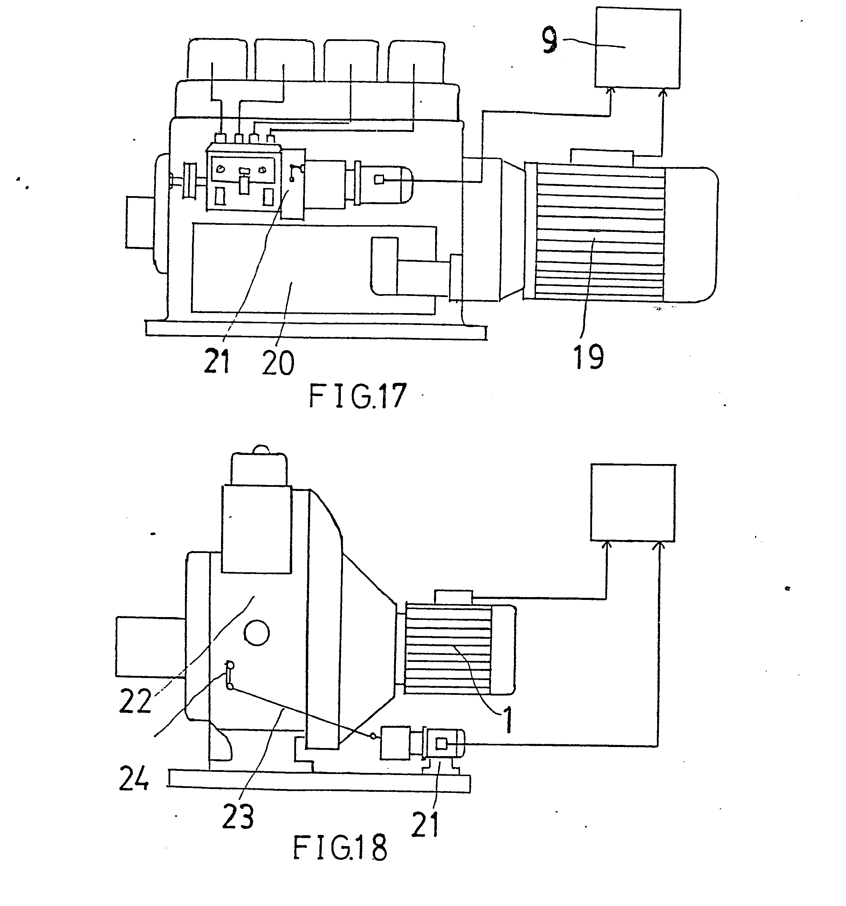

-Figure 17.- , shows a side view of a generator set formed by an asynchronous alternator (19), a four-cylinder internal combustion motor (20) and the grouping in Figure (16), (21). As an example of application of Figure (15) being applicable to any motor, without keeping in mind the number of cylinders.

-Figure 18.- , shows a side view of a generator set formed by an asynchronous alternator, a one-cylinder internal combustion motor (22) and the set in Figure (15), in which the transmission shaft (23) appears and which transmits the movement of the regulator to the connecting rod (24) which controls the acceleration butterflyof the carburetor or similar part. An example of application of Figure (15) being applicable to any motor, without keeping in mind the number of cylinders.

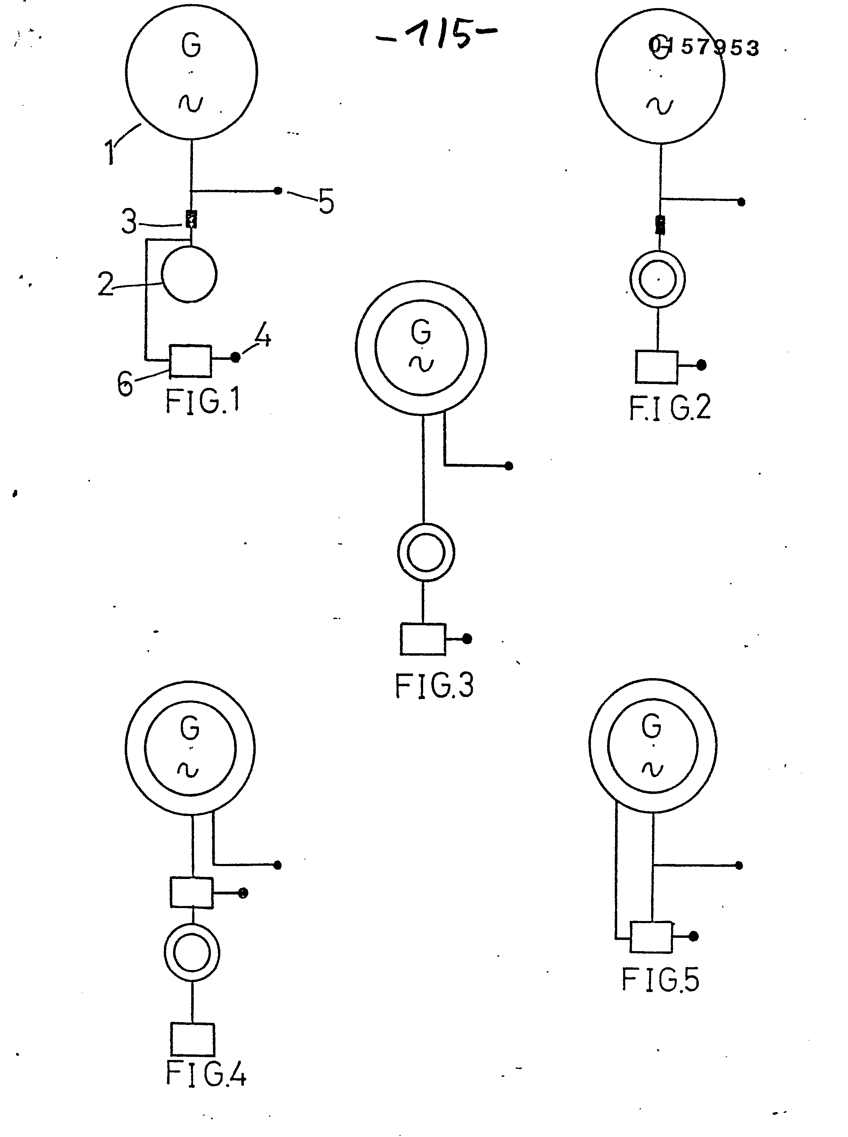

In view of these figures one can observe how the production system of electric energy here advocated is constituted of a squirrel cage asynchronous generator that, as previously said, has a rotor of the same name or in short circuit, with two types of windings in the stator: One simple like those of the motors common to the schemes 1, 2 and 7) through which circulate two currents which are: The main one owing to the nominal charge tension and that of excitation owing to the tension proceeding from the excitative (Figures 1 and 2) or proceeding from the excitation unit owing to the tension proceeding from the simple excitation unit (Figure 7). Another double or multiple one consisting of: a main one that is in charge of supplying useable power from the motor terminals. Another simple or multiple one through which the excitation current is received

0157953

(Figures 3,4,5 and 6), this operation is effected being supplied by the excitative, for schemes (3 and 4) and schemes (5 and 6) it is effected through the excitation and control unit.

The reference point is generally made in the terminal output or at distance depending on the needs of its installation.

In order to excite an asynchronous alternator it is enough supplying it with reactive energy, this being achieved with a second motor (2) which connected in parallel manages the correct working of the main motor.

Just as we speak of an alternator in the full extension of the word, we can equally speak of excitation if dealing with a synchronous generator, in which the power X is taken and which is usually 1/100 of the total potential in K.V.A. When we speak of the asynchronous motor which is in part object of this invention, it can be augmented limitlessly in such a way that it can be greater than the motor itself, Figures (1,2 and 7) or self-excited with a condenser of determined capacity in order to obtain the tension in a vacuum, and the increase of said capacity is by means of the connection in stages of several condensers controlled by the previously mentioned control unit. (6).

But since some circuits would not have in this way practical application due to the control system or excitative being very costly, an absorption element has been interpolated between the generator and the terminals output (figures 10 and 12), consisting of a saturable reactance or a short-circuit transformer. Therefore the tension causing saturation of the motor is superior to the nominal so when the drop in tension in the terminals is of a value determined to be lower than that of conventional regulation, the previously cited element enters into action absorbing the difference

0157953

in tension between that of saturation and the output at terminals, as the reference of the control unit is taken at said output.

In order for said absorption element to be made ineffective, the control unit and two tyristors connected parallelly and in opposition provoke a short circuit in the reactance. For simplicity in the regulation and control circuit and as much as possible for low powers, a triad is utilized instead of two trystors as these have a very limited electrical intensity.

The use of a transformer instead of a reactance is due to that the latter should not be saturated as if it gives the exact tension of absorption on the secondary, same is reduced from the output line. For this transformer to be made ineffective, the primary is disconnected from the mains and short-circuited by means of the regulation and control unit to which a disconnection circuit from the mentioned primary has been added and is controlled as previously by a zener diode and amplified in order to obtain the gateway strength of the trystors or triad. The latter having the advantage over the circuit of reactance, as the strength (intensity) of the primary and the tension of same is superior to the secondary, consequently the strength is less and therefore the importance of the electronic short-circuit components is also less.

Absorption element and control system which is also interpolated between both motors, a control unit being installed exclusively for this purpose (figure 4), taking its reference in the above-mentioned output from terminals when there is only this latter element or if it exists parallelly with the previously cited element with the purpose of simplifying the electronic system.

Another option of the alternator system which is also recommended is this report is that of a motor which does not utilize

/13

**0157953**

all its peripheral stator density or from an induced secondary (figures 3,4,5 and 6) since in this way with there being output power in reserve, not only does the tension drop less brusquely — but the remaining density is left free from being fed by the excitative, or excitation unit based on condensers, thereby achieving a motor of such proportions in which a short circuit in the output from terminals does not totally nullify the magnetic field of the excitation, being able to start a very powerful electric motor without departing from the international norms demanded of industrial alternators.

A third system of excitation and control applicable to motors with double stator winding is that of an alternator saturated by the excitative or not, and that has between its windings a difference in tension and, or in phase so that on connecting them parallelly an intensity (strength) between them is produced and consequently in a previously determined magnitude, a cosine favourable to the purposes of this invention which is capable of taking the excitation from the motor in question and in consequence not having in this report mention of reactances producing this phenomenon which, by means of a control unit appropriate for this circuit, have the tension nullified at the desired level and regulated automatically.

The excitative will be of the alternator type with as many phases as the main alternator, and can be synchronous or asynchronous, Both motors can be constructed on one sole axle or shaft thusly constituting a double motor with only two bearings and simplifying the construction of the asynchronous alternator. With the variant of being synchronous and with inductor coils fed by direct current, the control unit has a wave rectifier which is

0157953

the only additional option of same to the control unit in order to excite directly, as other rectifications effected on said units are utilized to feed same, converting themselves afterwards into alternances of the above-mentioned reactive current. The excitation of the asynchronous motor is exclusively alternating.

All that explained and detailed up to this point is mentioned for one sole velocity and is applicable to all and each one of them, having on one same stator grooves sufficiently ample in order to accomodate other velocities just like the electric motors which employ the most usual systems of windings known on the international market. However, there is the difference that each of them, in the main motor as well as in the excitative, and all are parallelly and permanently connected between themselves, and also that same is true as long as one velocity does not produce alterations in a winding of another velocity. For example, a speed of 1,500-R.P.M. does not alter at all another of 3,000 and another of 750 because the three velocities cited have a polar opposition so that when one of them is functioning, no tension is produced in the others. Switches must be added for all those velocities that can alter the operation of the electric energy production system dealt with here, being disconnected when one of the others is functioning. The unit or units of excitation and control are commutated by means of a system (9) (figure 12) at the speed which enters into action, all those elements of excessive character are disconnected, for example condensers since it is known that one velocity inferior to another in revolutions per minute (R.P.M.) is also inferior in potential (K.V.A.) that is perfectly proportional to the force in kilowatts (K.W.) the primary motor has, whatever its nature is.

0157953

When the electric energy production system advocated herewith is applied in charging storage batteries, one of the previously cited schemes is used, the most adecuate one for each case with the only difference being the addition of a wave rectifier for the obtaining of direct current.

All the schemes are symbolicly unifiliar with the objective being to simplify this report, although they are indistinctly singlephase, two-phase, or three-phase using as many elements or connections as necessary for their assembly.

Given that the functional philosophy of the alternator is fundamented on the residual magnetism of the rotor, if said magnetism is lost, its polarization can be effected in two ways. With the motor fully stopped and with the collaboration of a direct current source, or with the motor in operation and in collaboration with an alternating current similar to that of the synchronism, that is with the closest possible frecuency.

The form, dimensions and materials can be variable as well as in general anything secondary or any accessory, as long as it does not alter, change or modify the essence of the object described.

The terms in which this report is written are true and a faithful reflexion of the object described, and must be taken in a broad sense and never in a limitative way.

The applicant reserves the right to obtaining the opportune additional complementary certificates for improvements or perfectioning that practical use might deem advisable in the future.

0157953

CLAIMS:

1). An electric energy production system, characterized by being constituted of an asynchronous alternator with more than one winding in the output of terminals to the exclusive purpose of having several velocities similar to those of asynchronous electric motors, with equal frequency in all and each one of them. A motor from which mechanical energy of various and indistinct origin is supplied, same preferably being diesel, hydraulic turbine or internal combustion. A centrifugal-electric regulator which takes reference from the frequency of the alternator's output from terminals, and according to the variation in said frequency and through the renown system of the lost steam engines which is presently used in the majority of the internal combustion engines, which consists of a counter-weight regulator that varies its position in proportion to the centrifugal force, controls the acceleration system of the mechanical motor thusly obtaining a constant frequency. A commutation device, electric with the cited velocities, which by means of switches commanded manually at the user's will or automatically by the overcharge of the winding of the velocity in use, or by a discharge of another velocity of greater power, and by means of a temporizer, commutates the sector of the motor in operation (velocity) to the immediately superior or inferior one according to the staging selected or desired.

2). A system of production of electrical energy, as per vindication 1), characterized by the cited alternator has a range of velocities in which each of them does not use all its peripheral density of the winding for the output of terminals, but rather the remainging density in a percentage set according to the needs in each case, and completes the polar passage at the same time as it receives the reactive energy of excitation proceeding from the excitative or

0157953

the excitation and control unit.

3). A system of production of electrical energy, as per vindication 1), characterized because the cited alternator presents a second option in which the winding of each velocity or the one considered to be necessary utilizes all its peripheral density in the output from terminals and parallelly receives through its winding the reactive energy from the second machine called excitative.

4). A system of production of electrical energy, as per vindication 3), characterized by that/said excitative an absorption element is added consisting of a saturable reactance or transformer in series with its output line in order to avoid the tension from the cited excitative disappearing with brusque charges, same having a working tension superior to the nominal.

5). A system of production of electric energy, as per vindications 1 and 3) characterized by the excitative having two windings as in vindication 1), the two completing the polar passage foreseen in the machine's calculation.

6). A system of production of electrical energy, as per vindications 2 and 5) both machines having windings that do not employ all their peripheral density in the output of utilizable tension using the rest of said density to receive the reactive current.

7). A system of production of electrical energy, as per vindication 2), the mentioned excitative presents a second option consisting of this apparatus being synchronous with the objective of always having an advance in phase over the main motor without using condensers and obtaining greater simplicity in the control unit.

8). A system of production of electrical energy, as per vindication 2), the alternator regulated at normal tension and at a value (level) inferior to its saturation, connected automatically to it is an absorption element in series with the output line and taking

reference at the output of terminals and after the cited absorption element, the machine in working condition is left saturated with the remaining tension absorbed by said element, with the purpose of giving the alternator greater electrical stability with brusque charges.

9). A system of production of electrical energy, as per vindication above-mentioned, characterized by said absorption element consisting of a saturable reactance or transformer with a short-circuitable primary to leave ineffective and a secondary with a tension equal to the difference between the machine's operating tension and the nominal one.

10). System of production of electrical energy, as per vindication 2) characterized by having a regulator for the reactive energy in order to obtain a constant tension in the terminals output. A regulator which will preferably be electronic and constituted by a transistorized amplifier that, before a reference signal supplied by some zener diodes, transmits said signal to tyristors connected in parallel and opposition or to a triad in charge of effecting controlled excitation automatically to the limit of the nominal tension in vacuum or in full charge. A regulator that can be installed in the main machine when it operates without the help of the excitative or over the latter when they operate jointly. A regulator that has another option consisting of a double output controlled at a distinct reference level within the tension tolerance norms, with the purpose of putting the absorption element into operation when necessary, the latter being left in short circuit when out of operation so as to simplify the circuit.

11). A system of production of electrical energy, as per vindication 1) characterized by having switches operated manually or automatically in order to effect the different changes in velocity,

0157953

taking retarded reference through a temporizer due to an excess loading or unloading of the cited velocities. A temporizer that makes itself necessary in order to avoid very frequent changes in the system.

12). A system of production of electrical energy, as per vindication 1) optionally has a wave rectifier for obtaining direct currentto be used when necessary (charging of batteries, soldering, etc.).

13). A system of production of electrical energy, as per vindications previously mentioned, characterized as its schematic representation will optionally be simplifyingly unifiliar and its utilization can be singlephase, two-phase or polyphase.

14). A system of production of electrical energy, as per vindications 2,3,4,5,6 and 7) the second machine called excitative will optionally be constructed together with the main alternator so as to simplify its construction and able to be mechanically independent in order to be installed alone if necessary.

15). A system of production of electrical energy, as per vindications 2 and 10) characterized by the/tension regulator(s) being commutable together with the operating velocity to the purpose of reducing the cost of the system in this patent, same being able to be built total or only partially, since all those elements of excessive character, for example condensers, will be left out of operation in the speed(s) inferior in potential.

0157953

FIG.1

FIG.2

FIG.3

FIG.4

FIG.5

0157953

FIG.6

FIG.7

FIG.8

FIG.9

7

-315-

0157953

FIG.10

FIG.11

3

8

10

11

9 FIG.12 13

12

5

FIG.13

FIG.14

16 14 FIG.15 15

17 18 FIG.16

0157953

FIG.17

FIG.18